(19) Europäisches Patentamt
European Patent Office
Office européen des brevets

(11) EP 0 209 228 B2

(12) NEW EUROPEAN PATENT SPECIFICATION

(45) Date of publication and mention of the opposition decision:
**09.06.1999 Bulletin 1999/23**

(45) Mention of the grant of the patent:
**06.09.1989 Bulletin 1989/36**

(21) Application number: **86303980.6**

(22) Date of filing: **27.05.1986**

(51) Int Cl.[6]: **C11D 3/39**, C11D 3/395

# (54) Stabilized liquid hydrogen peroxide bleach compositions

Stabile flüssige Wasserstoffperoxid-Bleichmittelzusammensetzungen

Compositions de blanchiment stables liquides de péroxyde d'hydrogène

(84) Designated Contracting States:
**BE CH DE FR GB IT LI LU NL SE**

(30) Priority: **17.06.1985 US 745617**

(43) Date of publication of application:
**21.01.1987 Bulletin 1987/04**

(73) Proprietor: **The Clorox Company**
**Oakland California 94612 (US)**

(72) Inventors:
- **Mitchell, James D.**
  **Pleasanton California 94566 (US)**
- **Farr, James P.**
  **Pleasanton California 94566 (US)**
- **Carty, Daniel T.**
  **Danville California 94526 (US)**

(74) Representative: **Froud, Clive et al**
**Elkington and Fife**
**Prospect House**
**8 Pembroke Road**
**Sevenoaks, Kent TN13 1XR (GB)**

(56) References cited:
**EP-A- 0 009 839**
**EP-A- 0 106 634**
**EP-A- 0 124 341**
**EP-A- 0 137 669**
**DE-A- 2 152 741**
**DE-A- 2 441 725**
**DE-A- 2 918 842**
**US-A- 3 393 153**
**US-A- 3 649 401**
**US-A- 3 869 401**
**US-A- 3 951 839**
**US-A- 4 430 236**

Remarks:
The file contains technical information submitted after the application was filed and not included in this specification

EP 0 209 228 B2

## Description

This invention relates to household fabric bleaching compositions, but more particularly to liquid, hydrogen peroxide based bleaching compositions including additional adjuncts such as surface active agents, fluorescent whiteners, and dyes. The bleaching compositions have the peroxide and certain adjuncts therein stabilized by the addition of certain agents to chelate heavy metal cations and scavenge free radicals.

Liquid bleaches have been used in households for at least 50-75 years as aids in the bleaching and deaning of fabrics. Hypochlorite bleaches have been used most extensively for this purpose since they are highly effective, inexpensive and simple to produce.

In an attempt to broaden and extend the utility of beaches for household use, other bleach systems have been introduced in recent years. Prominent among these are dry powdered or granular compositons, most usually based upon peroxy- compositions; or upon perboro- compositions. Such materials must be placed into aqueous solution to release the bleaching action.

Liquid bleaching compositions utilizing peroxy compounds have generally been utilized less in the household market than the solid forms referred to above. Although hydrogen peroxide compositons effectively bleach a broad range of fabric materials; are less harsh than hypochlorite bleaches; and do not release objectional gases or odors; they have not found as much use in the household market as hypochlorite bleaches. This lack of use in the household market has been partially attributable to the instability of peroxide solutions. This instability is mediated principally by metal ion contamination even in extremely low concentrations. Considerable effort has been expended in the search for stabilizing agents for hydrogen peroxide compositions.

Perhaps one reason why stabilized hydrogen peroxide compositions have not been successful is the fact that it is very desirable to add other organic components to commercial bleaching compositions, especially where the compositions are intended to be used as "pre-spotters". Such "pre-spotter" compositons most advantageously include surfactants for their detergent effect; fluorescent whiteners (also known as optical brighteners) to increase fabric reflectance and the user's perception of increased whiteness; and dyes for producing a pleasing color to the bleach solutions. All of the above components, in addition to the bleach compounds themselves have been found to be necessary in a liquid peroxygen bleaching composition to achieve full acceptance in the household market.

Unfortunately liquid bleaching compositions based upon peroxide not only deteriorate from the presence of contaminants, e.g., trace metal cations (0.5ppm or greater); but the surfactant, fluorescent whiteners, and dyes are attacked by the peroxide itself, as it is a powerful oxidizing agent. Thus peroxide based bleaching compositions including surfactants, fluorescent whiteners, and dyes deteriorate quite rapidly. The surfactants are oxidized and lose their detergency; the fluorescent whiteners are oxidized and lose their effect; and the dyes are oxidized and lose their color, or are changed to undesirable colors.

EP-A-137669, for example, relates to detergent composition comprising from about 5% to about 60% organic surfactant, from about 7% to about 80% detergency builder essentially free of phosphate and a bleach system. According to this reference, the detergency builder has defined calcium builder capacity and defined magnesium: calcium selectivity and is preferably a mixture of an aluminosilicate and a polycarboxylate. The disclosed bleach system comprises peroxy bleaching agent, heavy metal scavenging agent and preferably a bleach activator. These prior compositions are said to combine excellent bleach stability, fabric damage characteristics and detergency performance.

EP-A-124341, for example, relates to a bleach auxiliary for use as a peroxygen bleach catalyst comprising a water-soluble complex of iron and a multi-dentate ligand-forming metal chelating agent having defined bleach catalytic activity and hydrolytic and oxidative stability. The metal chelating agent is preferably a hydroxycarboxylic acid having the general formula:

$$R[C_nH_{2n-m}(OH)_m]\ CO_2H$$

wherein R is $CH_2OH$, CHO or $CO_2H$, n is from 4 to 8 and m is from 3 to n, or a salt, lactone, ether, acid ester or boric ester thereof. Bleach and laundry compositions containing the complex are also disclosed therein.

The present invention is directed to methods for stabilizing liquid hydrogen peroxide based aqueous bleaching compositions that also include nonionic surfactants, fluorescent whiteners, and/or dyes. The invention is also directed to compositions produced by such methods.

More particularly the present invention relates to liquid hydrogen peroxide bleaching compositions (including the aforementioned additional components) that are stabilized by the addition of a certain metal chelating agent as well as a certain free radical scavenging agent thereto. The presence of both the metal chelating agent and free radical scavenging agent are necessary to achieve the desired stability.

In one embodiment, the present invention provides a stabilized liquid peroxide bleaching composition comprising an aqueous composition of hydrogen peroxide, a nonionic surfactant, a metal chelating agent and an organic

component which is a fluorescent whitener and/or dye, and mixtures thereof, characterized in that the composition also contains as a free radical scavenging agent a partially hindered substituted hydroxybenzene and the metal chelating agent is an aminopolyphosphonate, said composition having a pH of 1-8.

In another embodiment the present invention provides a method for stabilizing an organic component of a non-ionic surfactant-containing liquid hydrogen peroxide bleaching formulation into which said organic component has been mixed which organic component is a fluorescent whitener and/or a dye, comprising admixing into said hydrogen peroxide bleaching formulation a metal chelating agent, characterized in that there is also admixed therein as a free radical scavenging agent, a partially hindered substituted hydroxybenzene and the metal chelating agent is an aminopolyphosphonate, the substituted hydroxybenzene and aminopolyphosphonate stabilizing the fluorescent whitener and/or dye, said composition having a pH of 1-8.

The metal chelating or sequestering agent may be selected from amino polyphosphonates, which are known to sequester metal ions such as $Fe^{+++}$ and $Cu^{++}$.

The free radical scavenging agent is a partially hindered substituted hydroxybenzene.

Stabilization of hydrogen peroxide compositions including the associated fluorescent whiteners (also known as optical brighteners), surfactant, and dye components relies upon the presence of both the amino polyphosphonate as metal chelating agent and the partially hindered substituted hydroxybenzene as the free radical scavenging agent. The stabilizing agents need only be present in very small amounts, e.g., tenths to hundredths of a percent by weight of the liquid composition, in order to effectively prevent deterioration and retention of the desired strengths of the various components over extended periods of time.

As utilized herein, "stabilization" refers to the retention of physical and chemical properties at, or somewhat below their initial levels by each of the liquid bleach composition components for extended periods of time; and a significant reduction in the rate of deterioration of such components in comparison to unstabilized formulations. Thus, in the presence of the stabilizing agents, the peroxide component retains most of its initial oxidation potential; the surfactant component retains most of its detergency; the fluorescent whitener retains most of its ability to impart improved appearance to fabrics; and the dye component is prevented from completely oxidizing.

It is an object of the invention to provide a method for stabilizing the components in a liquid hydrogen peroxide bleaching composition, when the components include organic components susceptible to oxidation, such as surfactant, fluorescent whitener and/or dye.

This invention includes in aqueous hydrogen peroxide compositions an agent to sequester metal ions, i.e. an amino polyphosphonate as a metal chelating agent, and a partially hindered substituted hydroxybenzene as an agent to scavenge free radicals in said liquid composition. Such a stabilizing system may serve to stabilize said liquid peroxide oxidising or bleaching compositions. Also it may serve to arrest decompositions of organic components, such as surfactants, dyes and whiteners, contained within a liquid peroxide bleaching composition.

In one aspect this invention stabilizes liquid hydrogen peroxide bleach compositions by incorporating therein small amounts of a metal chelating agent, which is a polyphosphonate, and a free radical scavenging agent, a substituted hydroxybenzene.

In another aspect, this invention provides an improved stabilizing system for aqueous hydrogen peroxide containing compositions that include fluorescent whiteners and dyes that are susceptible to decomposition and wherein said stabilizing system is added to retard decomposition, said stabilizing system comprising a combination of a metal chelating agent and a free radical scavenger, wherein the metal chelating agent is an amino polyphosphonate and the free radical scavenging agent is a partially hindered substituted hydroxybenzene.

In this invention liquid hydrogen peroxide based household bleaching compositions are stabilized by the addition of small amounts of a two component system, the metal chelating or sequestering agent and the free radical scavenging agent to trap free radicals.

The liquid bleach compositions comprise an aqueous hydrogen peroxide bleaching component, with the addition of at least one nonionic surfactant, a fluorescent whitener and/or dye, and a fragrance if desired, and suitable amounts of an acid or base to maintain the final solution pH in the range of 1-8, more usually 1-6, and most preferably 2-4. Small amounts of the stabilizing agents, and, of course, water complete the bleach compositions.

The peroxide component may be fairly dilute. In one preferred embodiment hydrogen peroxide is present at bout 3.5% by weight. The nonionic surfactant is present at levels of about 3-4% by weight. The whiteners are present at levels of about 0.15-0.6% by weight. The dye may comprise about 0.0005% by weight of the composition. Small amounts of fragrance oil e.g., 0.01% by weight may also be present. The stabilizing agents may comprise about 0.1-0.2% by weight in the case of the said chelating agent, and about 0.01-0.03% by weight in the case of the said free radical scavenging agent.

Sufficient buffer is added to maintain the product pH at 1-8. Water usually comprises the remaining percentage of the solution. The water should be deionized to reduce metal ion contaminants to as low a level as possible. It should be noted, however, that even if metal ion contamination reaches levels of 2-10 ppm or more, the stabilizing system of the invention is still effective.

As will be noted hereinafter, the stabilizing agents appear to have a synergistic effect upon the stability of the bleach compositions. Both the chelating agent and the free radical scavenger must be present in order to fully stabilize the compositions.

The reason for the stabilization effect is not fully understood. However, without wishing to be bound thereby, it is theorized that in the presence of hydrogen peroxide, organic compounds such as nonionic surfactants, e.g., ethoxylated alcohols, and fluorescent whiteners, e.g., stilbenes and distryrylbiphenyls, a reaction occurs with the peroxide and/or its decomposition species to produce free radicals. Once the free radicals are produced they are able to react further with the organic components to continually degrade the composition.

More specifically, in aqueous solution, free radical reactions can be initiated with peroxides, which act to abstract a hydrogen ion from, for instance, one of the ethylene groups present on the nonionic surfactant molecules. Such reaction might be viewed as follows:

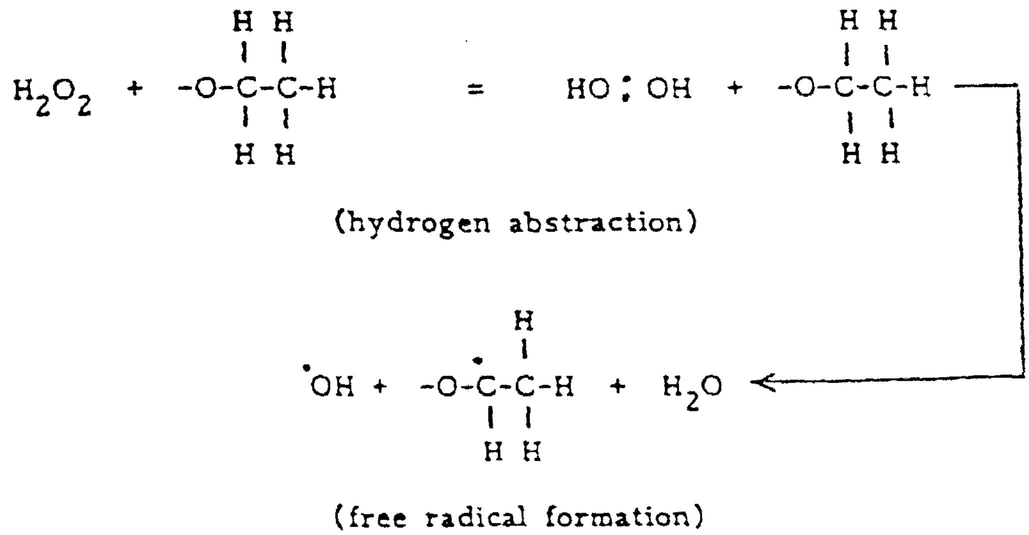


Alternately, the hydrogen peroxide itself may form free radicals by homolytic cleavage of either an O-H bond or the O-O bond. That is:

$$HO:OH \rightarrow {}^{\cdot}H + {}^{\cdot}OOH,$$

or

$$HO:OH \rightarrow 2\ {}^{\cdot}OH$$

In any event, there are a number of mechanisms by which free radicals can occur in the peroxide-organic composition. By a little understood mechanism it appears that the presence of heavy metal cations also promote the generation of free radicals. Such free radical reactions are self-propagating and become a chain reaction until a termination product is produced. By such time, in the absence of any stabilization means, both the peroxide and the organic components are, in large measure, destroyed.

Once formed, any such free radicals are free to combine with other organic species in the solution, e.g., the optical brighteners and dye. Such free radicals would be especially reactive with compounds having conjugated double bonds, e.g., dyes and brighteners.

In the stabilizing system used herein, the amino polyphosphonate chelating agent appears to act to sequester the heavy metal cations, especially polyvalent metals such as copper and iron which are always present in small amounts among the mineral components in water. Thus the heavy metal cations' ability to catalyse peroxide homolysis is interfered with. Similarly the heavy metals' ability to mediate free radical generation is eliminated or greatly reduced.

The hydroxybenzene free radical scavenging agent appears to work by tying up any free radicals initially formed in the solution. Thus the ability of the free radicals to degrade the organic components is removed at the same time the self-propagating free radical cascade reactions are stopped short. By such a mechanism, destruction of the desired surfactant, optical whitener, dye, and perfume components is arrested or greatly reduced.

It should be understood that the foregoing is presented as a possible explanation for the surprising stability imparted to the peroxide bleaching compositions; but the inventors do not thereby intend to be bound by such explanation. Other plausible reactions may be responsible for the improvement in stability.

Yet the individual functions of the chelating agent and the free radical scavenger do not explain why such surprising improved stability is achieved by the present invention. When the two component stabilizing system is used in liquid hydrogen peroxide bleach compositions, decomposition of the organic components therein is dramatically decreased, even over the stabilizing abilities of the chelating agent and the free radical scavenger considered individually. Therefore the combination of the chelating agent and the free radical scavenger appears to possess synergistic action in improving stability of liquid hydrogen peroxide compositions containing said organic components.

Referring to the stabilized peroxide compositions of the invention, an aqueous hydrogen peroxide source is present as the principal active ingredient and functions as the bleaching agent. The hydrogen peroxide is normally present in the range of about 0.05-50 weight %, most usually at about 0.1-35 wt.%, and most preferred at 0.5-15 wt.%. The hydrogen peroxide is a staple article of commerce available from a number of commercial sources. In making up the bleaching compositions, ordinarily the peroxide is purchased as a concentrated aqueous solution, e.g., 70%, and diluted with deionized water to the desired strength. The FMC Corp. of Philadelphia, Pennsylvania is one source of hydrogen peroxide.

Nonionic surfactants are used in the bleaching compositions. Not only do they perform the normal soil removing function; but, in the present formulations, they also assist in emulsifying the free radical scavenger into the aqueous bleach formulation. as will be noted hereinafter, the free radical scavenger component is somewhat hydrophobic. The surfactant therefore assists mixing of free radical scavenger into the bleach compositions.

As will be also noted hereinafter, the surfactant component can provide a thickening effect; especially when used in higher concentrations, such as when exceeding about 5 wt.%.

The surfactants are nonionics. Suitable nonionics include polyethoxylated alcohols, ethoxylated alkyl phenols, polyoxyethylene or polyoxypropylene block co-polymers, anhydrosorbitol esters, alkoxylated anhydrosorbitol esters, and the like. Other potentially suitable nonionic surfactants are disclosed in the <u>Kirk-Othmer Encyclopedia of Chemical Technology</u>. 3rd Edition, Volume 22, pp. 360-377 (1983). Such nonionic surfactants may be obtained from any number of commercial sources. One such source for polyethoxylated alcohols is the Shell Chemical Co. of Houston, Texas and are known under the tradename "Neodol". One suitable surfactant is "Neodol 25-7". This Neodol is an ethoxylated alcohol, wherein the alcohol has from 12-15 carbons to which 7 ethoxy groups are attached. Anhydrosorbitol esters (including sorbitan esters) are available from Atlas Chemical Industries under the tradenames "Tween" and "Arlacel".

The surfactant may be present in the compositions in about 3-4 weight %, although this level is not critical. Lower, or higher surfactant concentrations are acceptable within the ranges noted. The preferred range for surfactant is 0-50 wt.%; the more preferred range is 0-20 wt.%; and the most preferred range is 0-10 wt%. At higher levels, and, as noted above, the surfactants may beneficially have a thickening effect on the liquid compositions. Such thickening would aid in the dispersion of particulate components such as dyes and whiteners. Also, as noted above, the surfactants may also assist in emulsifying the liquid compositions and aid in the suspension of some of the free radical scavengers since they tend to be somewhat insoluble in aqueous medium. Mixtures of the surfactants are also suitable.

Fluorescent whiteners (also referred to as optical brighteners, or FWA's) are also included in the bleaching formulations. Such whiteners are also common commercial products. Such products are fluorescent materials. very often substituted stilbenes and biphenyls, having the ability to fluoresce, by absorbing ultraviolet wavelengths of light, and then emitting visible light, generally in the blue wavelength ranges. The whiteners settle out or deposit onto the fabrics during the bleaching or washing process to thereby impart the desired whiteness. The whiteners may be present in the bleaching compositions in the order of several hundredths to about 5 wt.%, more preferably 0-1 wt.%, and most preferably 0-0.6 wt.%. One source of such whiteners is the Ciba Geigy Corp. of Greensboro, North Carolina, under the tradename "Tinopal". Other useful whiteners are disclosed in U.S. Patent 3,393,153 to Zimmerer et. al., at columns 3-5, which disclosure is incorporated herein by reference.

Several different whiteners may be combined in the compositons. Such selection is govemed by the fact that certain whiteners have affinity for cellulose fibers, e.g., cotton; while others have affinity for synthetic fibers, e.g., nylon. Since the bleaching compositions of the invention are intended for all types of fabrics, both natural and synthetic, it is advantageous to include whiteners of both types. One stilbene based product, "Tinopal RBS" has affinity for synthetic fibers. A distyrylbiphenyl product "Tinopal CBS-X" has affinity for cellulose fibers.

Small amounts of dye are also included in the preferred bleaching compositions. While the dye is only a very small percentage (perhaps 0.0005) of the compositions, it plays an important part in consumer's acceptance of the product. It is preferred that such dye be present in the range of 0-1 wt.%, more preferably 0-0.1 wt%, and most preferably 0-0.001 wt%. Dyes such as the anthraquinones are particularly suitable. Such anthraquinone dyes are available from the Sandoz Co. of Charlotte, North Carolina One suitable dye is "Nylosan 2AL" from the aforementioned company. Other dyes of the desired color with resistance to bleaching can also be used. In some instances, inorganic pigments may be used. Such preferred pigments are those which have the metallic cations substantially or completely complexed,

e.g., copper phthalocyanines.

A fragrance may also be used in the bleaching formulations, if desired. Any fragrance oil may be used, ordinarily in small quantities, e.g., 0.01%, so long as it is as stable as the other components. The preferred range is 0-5 wt.%. The more preferred range is 0-1 wt.%; while the most preferred range is 0-0.1 wt.%.

In addition to the aforementioned components, buffer is added to the composition in order to adjust the final pH into the 1-8 range, more preferably 1-6, and most preferably 2-4. Phosphoric acid is preferred for this purpose when acidic pH is desired. pH can be adjusted by proper amounts of acid or base.

As noted above, the stabilizing system is vital to the bleaching compositions. Both the chelating agent and the free radical scavenger must be present. Tests have shown that neither agent is as effective individually as when present in combination. Synergistic forces are obviously involved in the stabilization, prolonged stability of the bleaching compositions results only when both agents are present.

The chelating agent is an amino polyphosphonate. The amino polyphosphonates are commercially available compounds sold under the trademark "Dequest" by the Monsanto Co. of St. Louis, Missouri. These compounds have structures such as:

$$(H_2O_3PCH_2)_2\text{-N-}CH_2\text{-}CH_2\text{-N-}(CH_2PO_3H_2)_2$$

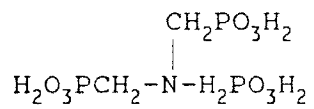

and:

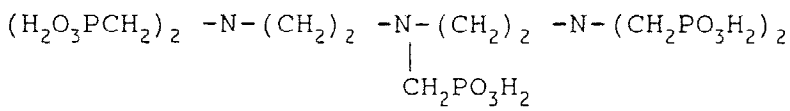

Such "Dequest" compounds are extremely effective as chelating agents in the bleach compositions.

The selected chelating agent should be present in the compositions in an amount sufficient to thoroughly tie up any heavy metal cations present in the aqueous solution. One or two tenths of a percent is sufficient. The chelating agent may be present in the range of 0.02-5 wt.%. The more preferred range is 0.04-0.3 wt.%. The most preferred range is 0.06-0.12 wt.%.

The second vital stabilizing agent is the partially hindered substituted hydroxybenzene free radical scavenger. Of this class of compounds butylated hydroxy toluene (BHT) and mono-tert-butyl hydroquinone (MTBHQ) have been found to be especially effective.

The free radical scavengers must resist oxidation by $H_2O_2$ and therefore, cannot be too strong a reducing agent. Strong reducing agents would more likely react with the peroxide.

The free radical scavenging hydroxybenzenes are partially hindered, i.e., have a substituent alkyl or similar group attached to some of the reactive sites on the ring structure. If too many reactive sites are left unblocked, it may be possible to react with more than one available free radical and polymerize, thus causing phase separation. Any such phase separation is undesirable and would remove free radical scavenging agent from the bleach solution.

The aforementioned BHT and MTBHQ satisfy all the above criteria and are therefore preferred as the free radical scavenging agent. BHT is commercially available from the Uniroyal Chemical Co. while MTBHQ is commercially available from the Eastman Chemical Co. of Kingsport, Tennessee.

Only very small amounts of the free radical scavenger are necessary in the bleach compositions. Generally, one to several hundredths of a percent provides effective free radical scavenging. The preferred range is 0.005-0.04 wt.%. The more preferred range is 0.007-0.03 wt.%; however the most preferred range is 0.01-0.02 wt.%.

As an example, a typical stabilized bleach formulation is set forth below:

| Preferred stabilized bleaching formulations | |
|---|---|
| Component | Wt. % |
| Nonionic surfactant (Neodol) | 2-4 |
| Fluorescent whitener | |
| -distyrylbiphenyl | 0.1-0.7 |
| -stilbene | 0.01-0.3 |
| Blue dye - anthroquinone | 0.0002-0.001 |
| Fragrance | 0.01 |
| $H_2O_2$ | 3-7 |
| Phosphonate chelating agent | 0.06-0.25 |
| Free radical scavenger | 0.005-0.02 |
| Phosphoric acid | sufficient to adjust pH to 2.3 |
| $H_2O$-deionized | remainder |

A number of tests were performed to ascertain the effectiveness of the stabilizing system of the present invention. Several samples of hydrogen peroxide bleach compositions were prepared having variations in components and percentages thereof.

One formulation had the composition:

| Formulation A | |
|---|---|
| $H_2O_2$ | 3.5 wt.% |
| Whitener (distyrylbiphenyl) | 0.1 |
| Acid blue dye | 0.0005 |
| Surfactant ($C_{12-15}$ ethoxylated alcohol) | 3.5 |
| Free radical scavenger (MTBHQ) | 0.03 |
| Chelating agent (phosphonate) | 0.10 |
| Buffer (phosphoric acid) | 0.025 |
| $H_2O$ | Balance |

Another formulation had the composition:

| Formulation B | |
|---|---|
| $H_2O_2$ | 3.5 wt. % |
| Whitener | |
| -(naphthotriazolylstilbene) | 0.02 |
| (distyrylbiphenyl) | 0.15 |
| Fragrance oil | 0.01 |
| Acid blue dye | 0.0005 |
| Surfactant ($C_{12-15}$ ethoxylated alcohol) | 3.5 |
| Free radical scavenger (BHT) | 0.01 |
| Chelating agent (phophonate) | 0.12 |
| Buffer (phosphoric acid) | 0.1 |
| $H_2O$ | Balance |

Another formulation had the composition:

| Formulation C | |
|---|---|
| $H_2O_2$ | 3.5 wt.% |
| Whitener | |
| -(naphthotriazolylstilbene) | 0.03 |

(continued)

| Formulation C | |
|---|---|
| (distyrylbiphenyl) | 0.5 |
| Fragance oil | 0.01 |
| Acid blue dye | 0.0005 |
| Surfactant ($C_{12-15}$ ethoxylated alcohol) | 3.5 |
| Free radical scavenger (BHT) | 0.01 |
| Chelating agent (phosphonate) | 0.12 |
| Buffer (phosphoric acid) | 0.1 |
| $H_2O$ | Balance |

In some tests the formulations were left unstabilized, i.e., the identical compositions as set forth above but no chelating agent or free radical scavenger; or only the chelating agent was included; or only the free radical scavenger was included.

To ensure that contaminants customarily causing peroxide deterioration were present, a source of both ferric cation and cupric cation were added to the samples. The various samples were then subjected to aging tests at elevated temperatures for various time periods, and each sample was then tested for the percentage of $H_2O_2$, dye, or whitener remaining as compared to the original amount present in the compositions.

Tables 1 and 2 below present the results of aging tests for 3 hours at 100°C and 4 weeks at 100°F (~37.8°C) and 120°F (~48.9°C), respectively.

Formulation A

Table 1:2.4 ppm $Fe^{+3}$ and 1.0 ppm of $Cu^{+2}$ added to all samples aged 3 hrs. at 100°C

| | Unstabilized Bleach Formulation (% remaining) | + chelating agent (Dequest) (% remaining) | + free radical scavenger (MTBHQ) (% remaining) | + Both stabilizing agents (Dequest + MTBHQ) (% remaining) |
|---|---|---|---|---|
| Dye | 0 | 24 | 0 | 51 |
| Whitener | 32 | 58 | 41 | 77 |

Formulation B

Table 2: 4 Week Storage Stability Test

| | 120°F (~48.9°C) Bleach Formulation (unstabilized) (% remaining) | + Dequest +BHT +1 ppm $Fe^{+3}$ +1 ppm $Cu^{+2}$ (% remaining) | 100°F (~37.8°C) Bleach Formulation (unstabilized) (% remaining) | + Dequest +BHT +1 ppm $Fe^{+3}$+1 ppm Cu (% remaining) |
|---|---|---|---|---|
| $H_2O_2$ | 91 | 99 | 96 | 99 |
| Whitener | 28 | 93 | 68 | 100 |
| Dye | 43 | 80 | 72 | 98 |

In another study, similar aging tests were conducted for a period of eight weeks at storage temperatures of 70°F (~21.1°C), 100°F (~37.8°C), and 120°F (~48.9°C). Table 3 below presents the results of these longer aging tests.

Formulation B

Table 3: 8 Week Stability Test[1]

| Storage Temp. | 70°F | (~21.1°C) | 100°F | (~37.8°C) | 120°F | (~48.9°C) |
|---|---|---|---|---|---|---|
| Component | S*[2] | Uns.[3] | S*[2] | Uns.3 | S*2 | Uns.3 |

[1]The numbers shown represent the % of the component remaining at the end of to test period.

[2]"S" indicates stabilized composition

[3]"Uns" indicates unstabilized composition

(continued)

| Formulation B | | | | | | |
|---|---|---|---|---|---|---|
| Table 3: 8 Week Stability Test[1] | | | | | | |
| $H_2O_2$ | 100 | 92.3 | 97 | 77 | 96 | 56 |
| Whitener | 100 | 57 | 94 | 13 | 56 | 10 |
| Dye | 96.8 | 51 | 83 | 0 | 55 | 0 |

[1]The numbers shown represent the % of the component remaining at the end of to test period.

In some further tests, stabilized samples of Formulation B and C above were aged at various temperatures in order to follow the deterioration of the various components with time. Catalyzing metal cations (5 ppm) were added to the stabilized formulations. The results are set forth in Table 4 and 5 below:

| Formulation C | | |
|---|---|---|
| Table 4:8 Week Stability Test | | |
| Storage Temp. | 100°F (~37.8°C) | 120°F (~48.9°C) |
| Component[1] | | |
| $H_2O_2$ | 96 | 95 |
| Whitener | 97 | 74 |
| Dye | 77 | 48 |

[1]The numbers shown represent the % of the componenent remaining at end of test period.

| Formulation B | |
|---|---|
| Table 5:8 Week Stability Test | |
| Storage Temp. | 100°F (~37.8°C) |
| Component[1] | |
| $H_2O_2$ | 98 |
| Whitener | 87 |
| Dye | 77 |

[1]The numbers shown represent the % of the componenent remaining at end of test period.

A review of the data present in Tables, 1, 2, 3, 4, and 5 reveals that when the peroxide compositions were stabilized with both the chelating agent and free radical scavenger, significantly more $H_2O_2$, whitener, and dye remained at all aging temperatures as compared with unstabilized composition.

It should be noted from Table 1 that the addition of the chelating agent alone, or the free radical scavenger alone, did not stabilize the compositions nearly as well as did the addition of both chelating agent and free radical scavenger. These data dearly indicate that both the chelating agent and the free radical scavenger must be present in order to optimize the composition's stability.

Another test was conducted on a simplified peroxide formulation omitting surfactant and whiteners. It was intended to ascertain whether the presence of surfactant was necessary to achieve good stability. The formulation was:

| Formulation D | |
|---|---|
| $H_2O_2$ | 3.5 wt. % |
| Acid blue dye | 0.0005 |
| Free radical acavenger (MTBHQ) | 0.01 |
| Chelaling agent (phosphonate) | 0.12 |
| Buffer (phosphoric acid) | 0.1 |
| $H_2O$ | Balance |

Formulation D above, along with an identical formulation that omitted the free radical scavenger and the chelating agent were boiled for three hours and the samples were analysed for detenoration of the dye as a measure of formulation stability. Table 6 below sets forth the results:

| Formulation D | | |
|---|---|---|
| Table 6: 3 hours at 100 °C | | |
| Component | Unstabilized | Stabilized |
| Dye | 78%* | 08%* |

*Indicates percentage of original component remaining at end of test

The results indicate that the formulation is stabilized even in the absence of surfactant.

## Claims

1. A stabilized liquid peroxide bleaching composition comprising an aqueous composition of hydrogen peroxid, a nonionic surfactant a metal chelating agent and an organic component which is a fluorescent whitener and/or dye, and mixtures thereof, characterized in that the composition also contains as a free radical scavenging agent a partially hindered substituted hydroxybenzene and the metal chelating agent is an aminopolyphosphonate, said composition having a pH of 1-8.

2. The composition of claim 1 further including a fragrance.

3. The compositions of any one of the preceding claims wherein the hydrogen peroxyde is present in about 0.05-50 percent by weight of the composition.

4. The compositions of any one of the preceding claims further including a buffer to maintain the pH at 1-8.

5. A method for stabilizing an organic component of a non-ionic surfactant-containing liquid hydrogen peroxide bleaching formulation into which said organic component has been mixed which organic component is a fluorescent whitener and/or a dye, comprising admixing into said hydrogen peroxide bleaching formulation a metal chelating agent, characterized in that there is also admixed therein as a free radical scavenging agent, a partially hindered substituted hydroxybenzene and the metal chelating agent is an aminopolyphosphonate, the substituted hydroxybenzene and aminopolyphosphonate stabilizing the fluorescent whitener and/or dye, said composition having a pH of 1-8.

6. The methods or compositions of any one of the preceding claims wherein said nonionic surfactant is selected from the group consisting essentially of polyethoxylated alcohol, ethoxylated alkyl phenols, polyoxypropylene or polyoxyethylene block copolymers, and mixtures thereof.

7. The methods or compositions as claimed in any one of the preceding claims wherein the partially hindered substituted hydroxybenzene is a substituted hydroquinone or is butyl hydroxytoluene.

8. The methods or compositions of claim 7 wherein the substituted hydroquinone is mono-tert-butyl hydroquinone.

9. The methods or compositions of any one of the preceding claims wherein the fluorescent whiteners are selected from fluorescent derivatives of stilbene and distyrylbiphenyls, and mixtures thereof.

## Patentansprüche

1. Stabilisierte flüssige Peroidbleichmasse, umfassend eine wäßrige Zusammensetzung aus Hydroperoxid, einem nichtionogenen oberflächenaktiven Mittel, einem Metall-Chelatmittel und einer organischen Komponente, die ein FluoreszenzWeißmacher und/oder ein Farbstoff ist, und Gemische davon, dadurch **gekennzeichnet**, daß die Masse auch als Mittel zum Abfangen von freien Radikalen ein teilweise gehindertes substituiertes Hydroxybenzol enthält und daß der Metall-Chelatbildner ein Aminopolyphosphonat ist, wobei die Masse einen pH-Wert von 1-8 hat.

2. Masse nach Anspruch 1, dadurch **gekennzeichnet,** daß sie weiterhin einen Duftstoff enthält.

3. Masse nach einem der vorstehenden Ansprüche, dadurch **gekennzeichnet**, daß das Hydroperoxid in einer Menge von etwa 0,05 bis 50 Gew.-% der Masse vorhanden ist.

4. Masse nach einem der vorstehenden Ansprüche, dadurch **gekennzeichnet**, daß sie weiterhin ein Puffermittel zur Aufrechterhaltung des pH-Werts von 1-8 enthält.

5. Verfahren zur Stabilisierung einer organischen Komponente eines ein nichtionogenes oberflächenaktiven Mittel enthaltenden flüssigen Hydroperoxidbleichmittels,in das eine organische Komponente eingemischt worden ist, wobei die organische Komponente ein Fluoreszenz-Weißmacher und/oder ein Farbstoff ist, umfassend die Zumischung eines Metall-Chelatmittels in das genannte Hydroperoxidbleichmittel, dadurch **gekennzeichnet**, daß gleichzeitig als Mittel zum Abfangen von freien Radikalen ein teilweises gehindertes substituiertes Hydroxybenzol zugemischt wird und daß das Metall-Chelatmittel ein Aminopolyphosphonat ist, wobei das substituierte Hydroxybenzol und das Aminopolyphosphonat den Fluoreszenz-Weißmacher und/oder den Farbstoff stabilisieren und wobei die Zusammensetzung einen pH-Wert von 1-8 hat.

6. Verfahren oder Massen nach einem der vorstehenden Ansprüche, dadurch **gekennzeichnet**, daß das genannte nichtionogene oberflächenaktive Mittel aus der Gruppe bestehend im wesentlichen aus polyethoxyliertem Alkohol, ethoxylierten Alkylphenolen, Polyoxypropylen- oder Polyoxyethylen-Blockcopolymeren und Gemischen davon ausgewählt ist.

7. Verfahren oder Massen nach einem der vorstehenden Ansprüche, dadurch **gekennzeichnet,** daß das teilweise gehinderte substituierte Hydroxybenzol ein substituiertes Hydrochinon oder Butylhydroxytoluol ist.

8. Verfahren oder Massen nach Anspruch 7, dadurch **gekennzeichnet,** daß das substituierte Hydrochinon Monotert -butylhydrochinon ist.

9. Verfahren oder Massen nach einem der vorstehenden Ansprüche, dadurch **gekennzeichnet**, daß die Fluoreszenz-Weißmacher aus Fluoreszenzderivaten von Stilben und Distyrylhiphenylen und Gemischen davon ausgewählt sind.

**Revendications**

1. Composition de blanchiment stabilisée à base de peroxyde liquide comprenant une composition aqueuse de peroxyde d'hydrogène, un agent tensioactif non ionique métallique, un agent chélatant et un composant organique qui est un agent de blanchiment optique et/ou un colorant, et leur mélange, caractérisé en ce que la composition contient également en tant qu'agent éminant les radicaux libres un agent chélatant les métaux et un hydrosybenzène partiellement substitué empêché et l'agent chélatant les métaux est un aminopolyphosphonate, la composition ayant un pH de 1-8.

2. Composition selon la revendication 1, comprenant de plus un parfum.

3. Compositions selon l'une quelconque des revendications précédentes, dans lequel le peroxyde d'hydrogène est présent dans environ 0,05-50% en poids de la composition.

4. Compositions selon l'une quelconque des revendications précédentes comprenant de plus un tampon pour maintenir le pH à 1-8.

5. Procédé pour la stabilisation d'un composant organique d'une composition de blanchiment de peroxyde d'hydrogène liquide contenant un agent tensioactif non ionique, dans laquelle ledit composant organique a été mélangé, ledit composant organique est un agent de blanchiment optique et/ou un colorant comprenant une opération consistant à ajouter et mélanger dans la composition de blanchiment de peroxyde d'hydrogène un agent chélatant métallique, caractérisé en ce que l'on mélange également en tant qu'agent éliminant les radicaux libres un hydroxybenzène substitué partiellement empêché et l'agent chélatant les métaux est un aminopolyphosphonate, d'hydroxybenzène substitué l'aminopolyphosphate stabilisant l'agent de blanchiment optique et/ou de colorant, la composition ayant un pH de 1-8.

**6.** Procédés ou compositions selon l'une quelconque des revendications précédentes, dans lesquels l'agent tensioactif non ionique est choisi dans le groupe constitué essentiellement par l'alcool polyéthoxylé, les alkyles phénols éthoxylés, les copolymères séquencés de polyoxypropylène polyosyéthylène et leurs mélanges.

**7.** Procédés ou compositions selon l'une quelconque des revendications précédentes, dans lesquels l'hydroxybenzène substitué partiellement empêché est une hydroquinone substituée ou est hydroxytoluène de butyle.

**8.** Procédé ou composition selon la revendication 7, dans lequel l'hydroquinone substituée est une hydroquinone mono-tert-butyle.

**9.** Procédé ou composition selon l'une quelconque des revendications précédentes dans lequel, les agents de blanchiment optiques sont choisis à partir de dérivés optiques de stylbènes et de distirylbiphényls et de leurs mélanges.